# EUROPÄISCHE PATENTSCHRIFT

(11) **EP 4 072 755 B1**
(45) Veröffentlichungstag und Bekanntmachung des Hinweises auf die Patenterteilung: **15.05.2024**
(21) Anmeldenummer: 20823753.7
(22) Anmeldetag: 07.12.2020
(51) Int. Cl.: B22F 10/28, B22F 10/32, B22F 12/70, B33Y 30/00, B33Y 50/02, B22F 10/73, B22F 10/77

(54) **AKTIVE KLIMATISIERUNG IN SLM-PROZESSEN**
ACTIVE CLIMATE CONTROL IN SLM PROCESSES
CLIMATISATION ACTIVE DANS DES PROCESSUS DE FUSION SÉLECTIVE PAR LASER

(30) Priorität: 12.12.2019 DE 102019219417
(43) Veröffentlichungstag der Anmeldung: 19.10.2022
(73) Patentinhaber: Realizer GmbH, 33178 Borchen (DE)
(72) Erfinder: RESCHETNIK, Wadim, 59557 Lippstadt (DE); ADAM, Guido, 33098 Paderborn (DE); TIMMER, Marc, 33102 Paderborn (DE)
(74) Vertreter: Weickmann & Weickmann PartmbB
(86) Internationale Anmeldenummer: PCT/EP2020/084819
(87) Internationale Veröffentlichungsnummer: WO 2021/115994

(56) Entgegenhaltungen:
- EP-A1- 3 209 446
- EP-A1- 3 281 726
- EP-A1- 3 539 695
- Wilhelm Meiners: "Direktes Selektives Laser Sintern einkomponentiger metallischer Werkstoffe", Von der Fakultat tor Maschinenwesen der Rheinisch- Westf?lischen Technischen Hochschule Aachen zur Erlangung des akademischen Grades eines Doktors der lngenieurwissenschaften genehmigte Dissertation, 1. April 1999 (1999-04-01), Seiten 43-49, XP002802104, Gefunden im Internet: URL:http://publica.fraunhofer.de/documents /B-63293.html [gefunden am 2016-04-20]

## Beschreibung

Die vorliegende Erfindung betrifft eine Vorrichtung zum Durchführen eines Verfahrens zum Herstellen eines Gegenstands nach der Methode des selektiven Pulverschmelzens durch schichtweises Aufbauen aus pulverförmigem Werkstoff, umfassend einen Bauraum, welcher dazu eingerichtet ist, den herzustellenden Gegenstand aufzunehmen, eine mit einem Pulver-Vorratsbehälter ausgestattete Pulver-Liefereinrichtung, welche dazu eingerichtet ist, Werkstoffpulver in den Bauraum zuzuführen, eine Pulverschicht-Präparierungseinheit, welche dazu eingerichtet ist, aufeinanderfolgende Schichten des zugeführten Werkstoffpulvers auf einem in dem Bauraum angeordneten Träger zu präparieren, eine Bestrahlungseinrichtung, welche dazu eingerichtet ist, eine zuletzt präparierte Pulverschicht zu bestrahlen und dadurch lokal aufzuschmelzen, und eine Schutzgas-Umwälzvorrichtung, welche dazu eingerichtet ist, ein in dem Bauraum vorliegendes Schutzgas umzuwälzen.

Insbesondere bezieht sich die Erfindung auf eine Vorrichtung zur Herstellung von Formkörpern nach dem Prinzip des selektiven Laser-Schmelzens oder des selektiven Laser-Sinterns. Zum Stand der Technik betreffend das Gebiet des selektiven Laser-Schmelzens soll auf die DE 199 05 067 A1, die DE 101 12 591 A1, die WO 98/24574 A, die DE 10 2009 038 165 A1, die DE 10 2012 221 641 A1, die EP 2 052 845 A2, die DE 10 2005 014 483 A1 und die WO 2017/084781 A1 verwiesen sein.

Es ist bekannt, dass mit dem Verfahren des selektiven Laser-Schmelzens Formkörper, wie etwa Maschinenteile, Werkzeuge, Prothesen, Schmuckstücke usw. entsprechend Geometriebeschreibungsdaten der entsprechenden Formkörper durch schichtweises Aufbauen aus metallischem oder keramischem Werkstoffpulver hergestellt werden können, wobei in einem Herstellungsprozess nacheinander mehrere Pulverschichten übereinander aufgebracht werden und jede Pulverschicht vor dem Aufbringen der nächstfolgenden Pulverschicht mit einem fokussierten Laserstrahl in einem vorgegebenen Bereich, der einem ausgewählten Querschnittsbereich des Modells des Formkörpers entspricht, erhitzt wird, so dass das Werkstoffpulver in den bestrahlten Bereichen zu zusammenhängend verfestigten Abschnitten umgeschmolzen wird.

Der Laserstrahl wird dabei jeweils entsprechend den Geometriebeschreibungsdaten des ausgewählten Querschnittsbereichs des Formkörpers oder ggf. daraus abgeleiteten Daten über die jeweilige Pulverschicht geführt.

Das Werkstoffpulver wird in derartigen Prozessen des selektiven Laser-Schmelzens normalerweise als bindemittel- und flussmittelfreies, metallisches, keramisches oder gemischt metallisch/keramisches Werkstoffpulver aufgebracht und durch den Laserstrahl auf seine Schmelztemperatur erhitzt, wobei die Energie des Laserstrahls so gewählt wird, dass das Werkstoffpulver an der Auftreffposition des Laserstrahls über seine gesamte Schichtdicke möglichst vollständig aufgeschmolzen wird, andererseits aber nicht so viel Wärme in das Pulvereingebracht wird, dass benachbarte Bereiche des Pulvers ebenfalls aufgeschmolzen würden, was zu einer verringerten Präzision des Herstellungsprozesses und zu unerwünscht hohen Wandstärken des hergestellten Gegenstands führen würde.

Über der Zone der Wechselwirkung zwischen dem Laserstrahl und dem Werkstoffpulver wird üblicherweise eine inerte Schutzgas-Atmosphäre, z.B. eine Argon-Atmosphäre mit gegenüber dem Umgebungsdruck erhöhtem Druck, aufrechterhalten, um ein Oxidieren des Werkstoffs oder andere unerwünschte chemische Reaktionen zwischen dem Werkstoff und Molekülen aus der Atmosphäre auszuschließen und ferner das Eindringen von Luft aus der Umgebung zu verhindern. Das hierzu verwendete Schutzgas wird in einem Gasumwälzungsprozess gefiltert und erneut dem Bauraum zugeführt.

Um unter Umständen noch in dem Schutzgas oder dem Werkstoffpulver verbleibende Restfeuchtigkeit aus der Schutzgasatmosphäre zu entfernen, ist beispielsweise in der EP 2 992 986 A1 die Verwendung einer rein passiven Gastrocknungseinrichtung vorgeschlagen worden, in welcher beispielsweise Silikagel in einem Vorratsbehälter in Gasaustausch mit der Schutzgasatmosphäre vorliegt und dem Schutzgas in bekannter Weise seine Feuchtigkeit entzieht. Ferner ist in der WO 2017/220744 A1 vorgeschlagen worden, mittels eines gesonderten Gassystems einen Trocknungsgasstrom bereitzustellen, welcher durch den Bauraum geführt wird, um Feuchtigkeit aus einer obersten Lage des Werkstoffpulvers aufzunehmen.

Es hat sich jedoch gezeigt, dass diese beiden vorgeschlagenen Trocknungsvorrichtungen dahingehend unflexibel sind, dass sie lediglich passiv bzw. ungeregelt wirken und somit eine Einstellung von definierten Prozessparametern der Schutzgasatmosphäre nicht möglich ist, bzw. dass sie durch das Vorsehen der Komponenten zur Erzeugung des Trocknungsgasstroms aufwendig und bauteilintensiv sind.

Weiterhin zeigt sich ebenfalls, dass die stets stattfindende Erwärmung des Schutzgases durch den Einfluss der Laserstrahlung von beiden vorgeschlagenen Trocknungseinrichtungen nicht behoben wird und somit weiterhin zu einer thermischen Ausdehnung aller Komponenten in dem Bauraum führen kann.

Die derart schwankenden Prozessparameter Feuchtigkeit und Temperatur des Schutzgases führen zu einer Verschlechterung der Prozessstabilität und der Bauteilqualität, da in dem Bauraum herrschende Feuchtigkeit die Pulverförderung und Verarbeitung deutlich erschwert, beispielsweise indem seine Fließfähigkeit, seine Beschichtung und seine Verteilung verschlechtert werden und auch bereits die Pulverförderung in den Bauraum hinein behindert werden kann, wobei es ferner zur Bildung von Agglomeraten und zur Spaltung von Wasser aus der verbleibenden Feuchtigkeit in der Atmosphäre kommen kann, was im Extremfall zu unkontrollierten Explosionen und Spritzerpartikeln oder wenigstens zu einer schlechteren Oberflächenqualität des hergestellten Bauteils führen kann.

Es ist somit eine Aufgabe der vorliegenden Erfindung, eine gattungsgemäße Vorrichtung zum Durchführen eines Prozesses eines selektiven Pulverschmelzens derart weiterzubilden, dass in dem Bauraum konstante Verarbeitungsbedingungen vorherrschen können, was zu einer verbesserten Bauteilqualität und zu einer erhöhten Effizienz in den Abläufen und der Herstellung von entsprechenden Gegenständen führen kann.

Zur Lösung dieser Aufgabe umfasst die erfindungsgemäße Vorrichtung wenigstens eine Klimatisierungseinrichtung, welche dazu eingerichtet ist, in einem Klimatisierungsbetrieb das von der Gasumwälzungsvorrichtung umgewälzte Schutzgas hinsichtlich seiner Temperatur und/oder seiner Feuchtigkeit zu klimatisieren. (Vorrichtungen im Stand der Technik mit Schutzgasklimatisierungseinrichtungen sind aus der EP 3 539 695 A1, EP 3 209 446 A1 sowie EP 3 281 726 A1 bekannt.) Hierdurch werden nicht nur die oben diskutierten Nachteile des Stands der Technik behoben, sondern es kann auch zu einer Reduzierung der notwendigen Kühlleistung für weitere Maschinenbauteile, wie beispielsweise Optikkomponenten der Bestrahlungseinrichtung, und einer schnelleren Abkühlung von heißem Pulver beigetragen werden, was wiederum Taktraten bei der Herstellung von Gegenständen und dadurch die Effizienz der Vorrichtung erhöhen kann.

Erfindungsgemäß wird eine Vorrichtung nach Anspruch 1 bereitgestellt.

Des Weiteren kann in der erfindungsgemäßen Vorrichtung die Schutzgas-Umwälzungsvorrichtung dazu eingerichtet sein, in dem Bauraum einen Überdruck aufrechtzuerhalten. Auch die Beibehaltung eines konstanten Überdrucks ist ein Betriebsparameter, der sich auf die entstehende Bauteilqualität positiv auswirken kann, wobei durch das Vorsehen des Überdrucks unter anderem das Eindringen von Luft aus der Umgebung verhindert wird.

Erfindungsgemäß umfasst die Klimatisierungseinrichtung der erfindungsgemäßen Vorrichtung eine Kühleinheit zum Kühlen des Schutzgases, nämlich einen Gegenstrom-Wärmetauscher, wobei hierdurch eine erhöhte Energieeffizienz der Klimatisierungseinrichtung in ihrem Klimatisierungsbetrieb in bekannter Weise erzielt wird. In einem derartigen Gegenstrom-Wärmetauscher wird in einer ersten Kühlstufe bereits gekühltes Schutzgas in einem Gegenstrom zu neu zugeführtem und zu kühlendem Schutzgas geführt, so dass eine thermische Kopplung zwischen diesen beiden Gasströmen hergestellt wird.

Um einen Klimatisierungsbetrieb hinsichtlich sowohl der Temperatur des Schutzgases als auch des Feuchtigkeitsgehalts durchführen zu können, ist der Kühleinheit ein Kondensat-Ableitungssystem zugeordnet, welches dazu eingerichtet ist, aufgrund der Abkühlung des Schutzgases anfallendes Kondensat abzuführen. Hierbei ist darauf zu achten, dass das Kondensat-Ableitungssystem ein Abführen des Kondensats aus der Vorrichtung ohne Druckverluste ermöglicht, hierzu geeignete Ableitungssysteme sind dem Fachmann jedoch aus dem Stand der Technik bekannt.

Ferner kann die erfindungsgemäße Vorrichtung eine Pulverrückführung zum Rückführen von nicht aufgeschmolzenem Werkstoffpulver in den Pulver-Vorratsbehälter umfassen, welche einen Teil der Pulver-Liefereinrichtung bildet.

Alternativ oder zusätzlich kann die Pulver-Liefereinrichtung ferner vorzugsweise wenigstens eine Filtervorrichtung für das Werkstoffpulver umfassen. Weiterhin kann die erfindungsgemäß Vorrichtung ferner eine Pulver-Absaugeinrichtung umfassen, welche dazu eingerichtet ist, in dem Bauraum verbleibendes Werkstoffpulver abzusaugen und welche hierzu eine Umwälzpumpe umfasst, wobei ein von der Umwälzpumpe angetriebener Strom von Schutzgas das verbleibende Werkstoffpulver durch einen Abscheider, insbesondere einen Zyklonabscheider, treibt.

Wenngleich unterschiedliche Vorrichtungen zum Anweisen des Klimatisierungsbetriebs der Klimatisierungseinrichtung denkbar sind, wie z.B. ein intermittierender Betrieb mit vorgegebenen Taktzeiten anhand weiterer Prozessparameter, wie beispielweise Bestrahlungszeiten, so kann in einer bevorzugten Ausführungsform die Klimatisierungseinrichtung eine Steuereinheit umfassen, welche dazu eingerichtet ist, Parameter des Klimatisierungsbetriebs anzupassen. Diese Steuereinheit kann in einer übergeordneten Steuereinheit, die weitere Prozesse des Ablaufs der Herstellung des Gegenstands steuert, integriert oder mit ihr betriebsmäßig für einen Datenaustausch gekoppelt sein.

Hierbei kann in einer weiter bevorzugten Ausführungsform die Vorrichtung wenigstens eine Sensoreinheit umfassen, welche mit der Steuereinheit der Klimatisierungseinrichtung betriebsmäßig gekoppelt und dazu eingerichtet ist, Daten hinsichtlich wenigstens eines Prozessparameters der Vorrichtung zu liefern. Indem die Sensoreinheit beispielsweise eine Temperatur oder eine Feuchtigkeit des Schutzgases an einer geeigneten Stelle in der Schutzgas-Umwälzungsvorrichtung misst und entsprechende Daten an die Steuereinheit ausgibt, kann ein Regelkreis für diesen wenigstens einen oder einen oder mehrere von ihm abgeleitete Prozessparameter geschaffen werden, die einen optimierten Betrieb und eine praktisch beliebig genaue Einstellung der entsprechenden Prozessparameter über der Zeit ermöglicht. Wie bereits angedeutet, kann somit der wenigstens eine Prozessparameter eine Temperatur und/oder eine relative oder absolute Feuchtigkeit des Schutzgases umfassen.

Wenngleich die wenigstens eine Klimatisierungseinrichtung in der erfindungsgemäßen Vorrichtung an verschiedensten Positionen vorgesehen sein könnte, so kann sie wenigstens teilweise in dem Bauraum oder dem Pulver-Vorratsbehälter oder einer der Schutzgas-Umwälzvorrichtung zugehörigen Gasleitung oder einer dem Pulverkreis zugehörigen Gas- oder Pulverleitung oder einer der Pulver-Absaugeinrichtung zugehörigen Gasleitung angeordnet sein, um dort befindliches Schutzgas zu klimatisieren.

Weitere Merkmale und Vorteile der vorliegenden Erfindung werden durch die nachfolgende Beschreibung einer Ausführungsform davon noch deutlicher, wenn diese zusammen mit den beiliegenden Figuren betrachtet wird. Diese zeigen im Einzelnen:
- Figur 1: eine schematische Darstellung einer Schutzgas-Umwälzeinrichtung in einer Ausführungsform einer erfindungsgemäßen Vorrichtung;
- Figur 2: eine schematische Darstellung einer Pulver-Absaugeinrichtung in einer Ausführungsform einer erfindungsgemäßen Vorrichtung;
- Figur 3: eine schematische Darstellung einer Pulver-Zufuhrvorrichtung in einer Ausführungsform einer erfindungsgemäßen Vorrichtung; und
- Figur 4: eine schematische Darstellung einer möglichen Ausführungsform einer Klimatisierungseinrichtung aus der Vorrichtung aus den Figuren 1 bis 3.

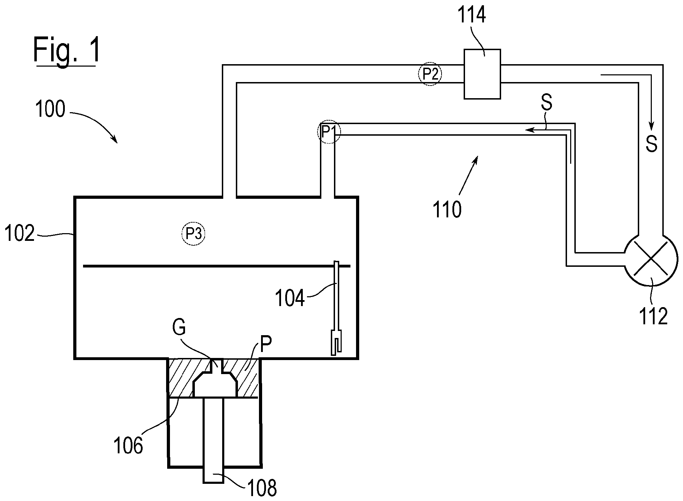

In den Figuren 1 bis 3 ist jeweils ist eine schematische Darstellung einer Ausführungsform einer erfindungsgemäßen Vorrichtung in einer Querschnittsansicht gezeigt und ganz allgemein mit dem Bezugszeichen 100 bezeichnet. Hierbei sind in den Figuren 1 bis 3 jeweils unterschiedliche Kreisläufe dargestellt, die jedoch in derselben Vorrichtung 100 eingesetzt werden und lediglich aus Gründen der Übersichtlichkeit auf die Figuren 1 bis 3 aufgeteilt worden sind.

Die Vorrichtung 100 umfasst einen Bauraum 102, welcher einen herzustellenden Gegenstand G aufnimmt, welcher nach der Methode des selektiven Pulverschmelzens durch schichtweises Aufbauen aus einem pulverförmigen Werkstoff P hergestellt wird, wobei in dem Bauraum 102 eine Schutzatmosphäre mit erhöhtem Druck herrscht.

Die zum Herstellen des Gegenstands G verwendete Bestrahlungseinrichtung ist in den Figuren 1 bis 3 aus Gründen der Übersichtlichkeit nicht dargestellt, jedoch ist in dem Bauraum 102 eine Pulverschicht-Präparierungseinrichtung 104 vorgesehen, welche dazu eingerichtet ist, aufeinanderfolgende Schichten von zugeführtem Werkstoffpulver P auf einem in dem Bauraum 102 angeordneten Träger 106 zu präparieren.

Dieser Träger 106 ist durch eine grob schematisch dargestellte Hubeinrichtung 108 höhenverlagerbar in dem Bauraum 102 aufgenommen, wobei er in dem in Figur 1 dargestellten Zustand momentan in einer derartigen Höhe gehalten wird, dass das von der Pulverschicht-Präparierungseinrichtung 104 präparierte Pulver P auf einem geeigneten Niveau für einen nachfolgenden weiteren Bestrahlungsschritt zum Aufbauen einer weiteren Schicht des Gegenstands G ausgebreitet ist.

Weiterhin zeigt die Figur 1 eine Schutzgas-Umwälzeinrichtung 110, in welcher durch eine Umwälzpumpe 112 ein Schutzgasstrom angetrieben wird, welcher schematisch durch die Pfeile S angedeutet ist. Hierbei wird das von der Schutzgas-Umwälzeinrichtung 110 umgewälzte Schutzgas bei einem Überdruck gegenüber der Umgebung der Vorrichtung 100 gehalten und die Schutzgas-Umwälzeinrichtung 110 führt Rauchgas und Spritzerpartikel aus dem Bauraum 102 ab, die in einem in der Umwälzeinrichtung 110 von dem umzuwälzenden Gas zu durchlaufenden Filter 114 aufgefangen werden können.

Da im Betrieb der nicht dargestellten Bestrahlungseinrichtung prozessbedingt Wärme in den Bauraum 102 eingetragen wird, wird sich das in der Vorrichtung 100 zirkulierende Schutzgas zwangsläufig erhitzen, was im Übrigen auch für zahlreiche weitere Komponenten der Vorrichtung 100 gilt. Da eine derartige Erwärmung von Komponenten der Vorrichtung 100 zu einer thermischen Ausdehnung dieser Komponenten führen wird, kann hierdurch die Genauigkeit des Herstellungsprozesses des Gegenstands G in der Vorrichtung 100 leiden, sodass eine Kühlung diverser Komponenten, wie beispielsweise einzelner Bauteile der Bestrahlungseinrichtung selbst, aus dem Stand der Technik bekannt ist. Weiterhin zeigt es sich, dass in dem Schutzgas oder dem Werkstoffpulver verbleibende Feuchtigkeit ebenfalls zu einer Verschlechterung der in der Vorrichtung 100 hergestellten Gegenstände G führen kann.

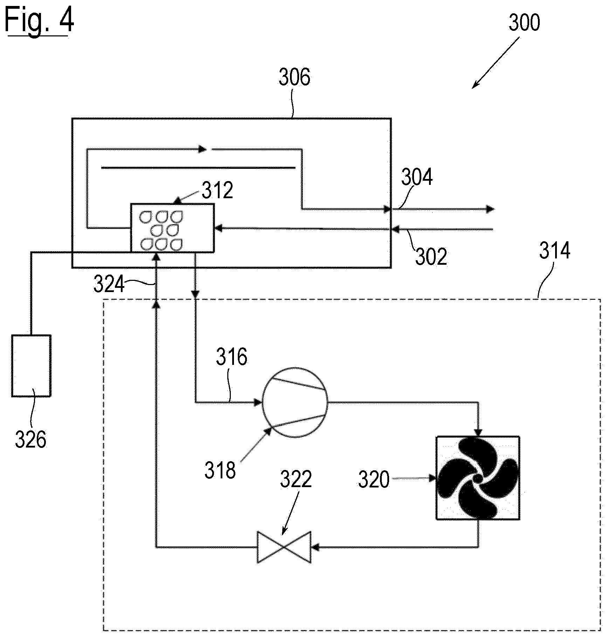

Erfindungsgemäß umfasst daher nun die Vorrichtung 100 aus den Figuren 1 bis 3 wenigstens eine der weiter unten im Zusammenhang mit Figur 4 beschriebenen Klimatisierungseinrichtungen, die zunächst einmal an verschiedenen Positionen in der Vorrichtung 100 aus Figur 1 vorgesehen sein kann bzw. können, beispielsweise in der Schutzgas-Umwälzeinrichtung 110 hinter der Umwälzpumpe, das heißt an der mit P1 angedeuteten Position, an einer Position P2 innerhalb der Schutzgas-Umwälzvorrichung 110 vor dem Filter 114 oder auch direkt dem Bauraum 102 zugordnet, das heißt an der Position P3. Hierbei ist die Position P1 gegenüber der Position P2 bevorzugt, da durch das vorhergehende Filtern der Schutzgasstrom an der Position P1 besser für den Kühlbetrieb geeignet ist als an der Position P2, wo der Schutzgasstrom noch Verunreinigungen enthalten kann, welche die Klimatisierungseinrichtung schädigen könnten.

Ferner kann der Klimatisierungseinrichtung betriebsmäßig wenigstens eine Sensoreinheit zugeordnet sein, welche in bekannter Weise Daten hinsichtlich wenigstens eines Prozessparameters, beispielsweise einer Temperatur und/oder einer relativen oder absoluten Feuchtigkeit des Schutzgases, an eine nicht dargestellte Steuereinheit der Klimatisierungseinrichtung liefert, um das Aufbauen einer Regelschleife zu ermöglichen. Auch diese wenigstens eine Sensoreinheit kann beispielsweise an einer der drei Positionen P1 bis P3 innerhalb der Vorrichtung 100 vorgesehen sein.

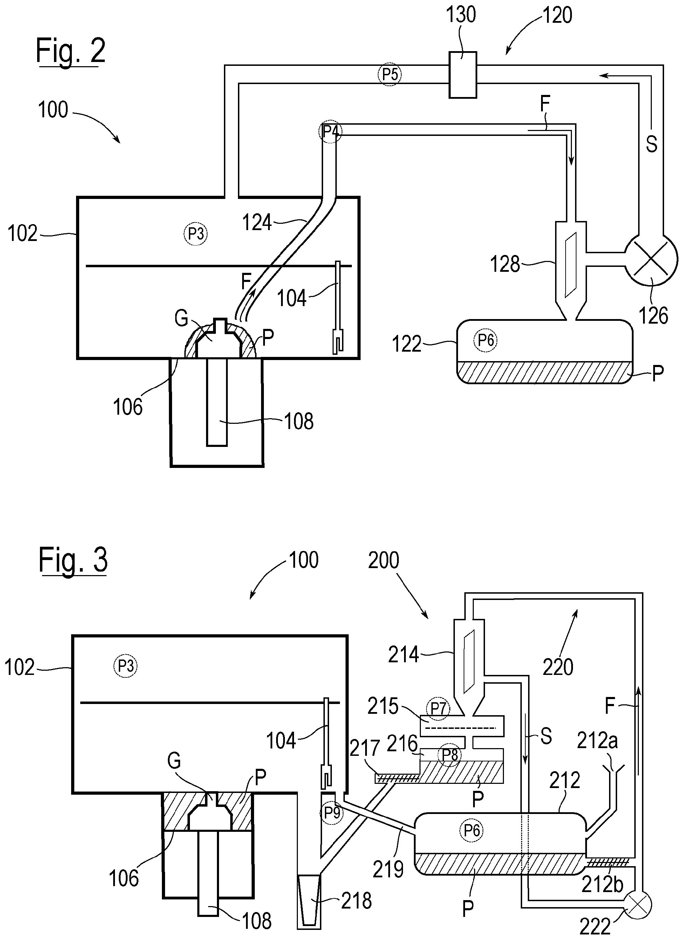

Figur 2 zeigt nun eine Pulver-Absaugeinrichtung 120, welche ebenfalls einen Teil der Vorrichtung 100 bildet. Mit Hilfe dieser Pulver-Absaugeinrichtung 120 kann durch einen Bediener nach Beendigung des Herstellungsvorgangs des Gegenstands G in dem Bauraum 102 dort noch verbleibendes, im Herstellungsprozess nicht aufgeschmolzenes Werkstoffpulver P abgesaugt und in einen Pulver-Vorratsbehälter 122 zurückgeführt werden. Um zu verdeutlichen, dass in Figur 2 der Herstellungsprozess des Gegenstands G im Wesentlichen abgeschlossen ist, hat in dem dort dargestellten Zustand die Hubvorrichtung 108 den Träger 106 in eine obere Anschlagstellung angehoben und der Gegenstand G steht nun für seine Entnahme aus dem Bauraum 102 bereit.

Für den Vorgang des Absaugens des verbleibenden Pulvers ist einerseits innerhalb des Bauraums 102 ein Absaugschlauch 124 vorgesehen, welcher von dem Bediener von außerhalb des Bauraums 102 zu dem abzusaugenden Werkstoffpulver P geführt werden kann, und andererseits eine Umwälzpumpe 126 vorgesehen, welche Schutzgas aus dem Bauraum 102 ansaugt und somit einen Gasstrom erzeugt, welcher das Absaugen des Werkstoffpulvers P bewirkt. Das so abgesaugte und dem Pfeil F folgende Werkstoffpulver wird durch einen Zyklonabscheider 128 geführt, in welchem es aus dem Gasstrom abgeschieden wird und sich in dem Pulver-Vorratsbehälter 122 sammelt.

Der Pulver-Absaugeinrichtung 120 kann ebenfalls ein Filter 130 zugeordnet sein, sowie wenigstens eine der weiter unten im Zusammenhang mit Figur 4 beschriebenen Klimatisierungseinrichtungen, die demzufolge neben der bereits angesprochenen Position P3 innerhalb des Bauraums 102 auch an weiteren Positionen P4 und P5 innerhalb der Pulver-Absaugeinrichtung 120 vorgesehen sein kann, wobei erneut die Position P5 der Position P4 bevorzugt ist, da bei ihr bereits gefiltertes Schutzgas eintrifft, oder an der Position P6 innerhalb des Pulver-Vorratsbehälters 122.

In Figur 3 ist nun ferner eine schematische Darstellung der Pulver-Zufuhrvorrichtung 200 der erfindungsgemäßen Vorrichtung 100 gezeigt. Hierbei ist erneut die Baukammer 102 mit der darin vorgesehenen Pulverschicht-Präparierungseinrichtung 104 und einer nicht dargestellten Bestrahlungseinrichtung dargestellt.

In dem Bauraum 102 ist auf dem Träger 106 ebenfalls bereits ein Gegenstand G aus einem Werkstoffpulver P aufgebaut worden, wobei analog zu Figur 1 die Herstellung des Gegenstandes G noch nicht vollständig abgeschlossen ist, sodass die Hubeinrichtung 108 den Träger 106 ebenfalls auf der in Figur 1 dargestellten Höhe hält.

Hierbei umfasst die Pulver-Liefereinrichtung 200 neben einem Pulver-Vorratsbehälter 212, welcher identisch mit dem oben bereits angesprochenen Pulver-Vorratsbehälter 122 sein kann, und einem Zyklonabscheider 214 ferner ein Ultraschallsieb 215 zum Sieben des zuzuführenden Werkstoffpulvers, einen Pufferbehälter 216 mit einer zugeordneten Förderschnecke 217 für das gesiebte Werkstoffpulver sowie eine Ladeeinheit 218, welche das von der Förderschnecke 217 zugeführte Werkstoffpulver letztlich von unten her in den Bauraum 102 eingibt, wo es dann von der Präparierungseinrichtung 104 für einen nachfolgenden Bestrahlungsschritt vorbereitet wird.

Weiterhin umfasst die Pulver-Liefereinrichtung 200 eine Pulverrückführung 219, durch welche in einem Bestrahlungsprozess nicht aufgeschmolzenes Werkstoffpulver zurück in den Pulver-Vorratsbehälter 212 überführt werden kann und folglich in einem nachfolgenden Schritt eines erneuten Zuführens in den Bauraum 102 nach einem erneuten Durchgang durch den Zyklonabscheider 214, das Ultraschallsieb 215, den Pufferbehälter 216 und die Förderschnecke 217 durch die Ladeeinheit 218 erneut in den Bauraum 102 geführt wird. Zudem ist dem Pulver-Vorratsbehälter 212 eine Nachfülleinrichtung 212a zugeordnet, durch welche im laufenden Betrieb der Vorrichtung 200 Werkstoffpulver in den Pulver-Vorratsbehälter 212 eingegeben werden kann.

Erneut ist die Pulver-Liefereinrichtung 200 mit einer Schutzgas-Umwälzvorrichung 220 gekoppelt, und zwar in einer Weise, dass das durch eine Umwälzpumpe 222 umgewälzte Schutzgas, dessen Strömung durch den Pfeil S angedeutet ist, das von einer Förderschnecke 212b aus dem Pulver-Vorratsbehälter 212 herausgeförderte Werkstoffpulver, wie durch den Pfeil F angedeutet, zu dem Zyklonabscheider 214 trägt.

Zur Klimatisierung des Schutzgases kann auch in der Pulver-Liefereinrichtung 200 aus Figur 3 wenigstens eine Klimatisierungsvorrichtung wie in Figur 4 dargestellt vorgesehen sein, wobei diese Klimatisierungseinrichtung erneut an unterschiedlichen Stellen in der Pulver-Liefereinrichtung 200 vorgesehen sein kann, beispielsweise erneut an einem Punkt P6 in dem Pulver-Vorratsbehälter 212 oder einem Punkt P3 innerhalb des Bauraums 102.

Neben diesen bereits weiter oben im Zusammenhang mit den Figuren 1 und 2 angesprochenen möglichen Positionen für die Klimatisierungseinrichtung könnte diese in Figur 3 ferner auch im Bereich des Ultraschallsiebs 215 an einer Position P7, einer dem Pufferbehälter 216 zugordneten Position P8 oder an einer der Ladeeinrichtung 218 oder der Pulverrückführung 219 zugeordneten Position P9 angeordnet sein.

Erneut können die genannten Positionen P1 bis P9 auch oder alternativ als Einbaupositionen für wenigstens eine Sensoreinheit zur Erfassung mindestens eines Prozessparameters, beispielsweise der Temperatur und/oder des Feuchtigkeitsgehalts des Schutzgases dienen.

Eine mögliche Ausführungsform einer Klimatisierungseinrichtung ist nun zuletzt in Figur 4 schematisch dargestellt und ganz allgemein mit dem Bezugszeichen 300 bezeichnet. Hierbei wird warmes und feuchtes Schutzgas am Punkt 302 in einen Gegenstrom-Wärmetauscher 306 eingegeben und temperiertes und trockenes Schutzgas am Punkt 304 wieder aus diesem Wärmetauscher 306 entnommen, nachdem es eine erste Vorkühlung des warmen und feuchten Schutzgases nach dem Gegenstromprinzip bewirkt hat.

Dem Wärmetauscher 306 ist ferner über eine Abkühleinheit 312 gekoppelt ein Kühlkreislauf 314 zugeordnet, wie er aus dem Stand der Technik bekannt ist, in welchem ein erwärmtes Kühlmittel beim Punkt 316 zunächst einmal durch einen Kompressor 318 verdichtet und erhitzt wird, anschließend durch einen Kühler 320 abgekühlt und verflüssigt wird und dann das abgekühlte Kühlmittel durch eine Drossel 322 dekomprimiert wird und sich hierdurch stark weiter abkühlt. Indem das derart abgekühlte Kühlmittel beim Punkt 324 auf den vorgekühlten Schutzgasstrom eingewirkt wird, kühlt sich dieser ebenfalls ab, kann als trockener und kalter Gasstrom zu dem Punkt 304 geleitet werden und ursprünglich darin vorliegende Feuchtigkeit wird im Bereich der Abkühleinheit 312 kondensieren. Diese kondensierte Feuchtigkeit kann durch ein ebenfalls aus dem Stand der Technik bekanntes Kondensat-Ableitungssystem 326 aus der Klimatisierungseinrichtung 300 entnommen werden, ohne dass hierdurch Schutzgas aus der Vorrichtung entweichen oder Gas von außen in die Vorrichtung eindringen kann.

Auf diese Weise kann eine Klimatisierung des Schutzgasstroms, welche durch den Wärmetauscher 306 und die Abkühleinheit 312 durchgeführt wird, welche folglich gemeinsam als Kühleinheit im Sinne der vorliegenden Erfindung wirken, erzielt werden, wobei durch eine nicht gezeigte Steuereinrichtung der Klimatisierungseinrichtung 300 Prozessparameter, wie beispielsweise die Temperatur oder die Kühlleistung des Kühlmittels des Kühlkreislaufs eingestellt werden können, beispielsweise anhand von durch die oben angesprochenen Sensordaten liefernden Sensoreinheiten, wobei beispielsweise eine erhöhte festgestellte Temperatur des Schutzgases an einem der Messpunkte dazu führen kann, dass die Steuereinheit der Klimatisierungseinrichtung die Kühlleistung des Kühlkreislaufs erhöht.

Durch die hier beschriebene aktive Klimatisierung von Schutzgasen in Vorrichtungen zum Durchführen eines Verfahrens zum Herstellen eines Gegenstands nach der Methode des selektiven Pulverschmelzens kann eine hervorragende Einstellung der relevanten Prozessparameter Temperatur und Feuchtigkeit des Schutzgases innerhalb des Bauraums 102 und somit eine verbesserte Genauigkeit und eine erhöhte Effizienz des Herstellungsprozesses erzielt werden.

## Patentansprüche

1. Vorrichtung (100) zum Durchführen eines Verfahrens zum Herstellen eines Gegenstands (G) nach der Methode des selektiven Pulverschmelzens durch schichtweises Aufbauen aus pulverförmigem Werkstoff (P), umfassend:
- einen Bauraum (102), welcher dazu eingerichtet ist, den herzustellenden Gegenstand (G) aufzunehmen;
- eine mit einem Pulver-Vorratsbehälter (122; 212) ausgestattete Pulver-Liefereinrichtung (200), welche dazu eingerichtet ist, Werkstoffpulver (P) in den Bauraum zuzuführen;
- eine Pulverschicht-Präparierungseinrichtung (104), welche dazu eingerichtet ist, aufeinander folgende Schichten des zugeführten Werkstoffpulvers (P) auf einem in dem Bauraum (102) angeordneten Träger (106) zu präparieren;
- eine Bestrahlungseinrichtung, welche dazu eingerichtet ist, eine zuletzt präparierte Pulverschicht zu bestrahlen und dadurch lokal aufzuschmelzen; und
- eine Schutzgas-Umwälzungsvorrichtung (110), welche dazu eingerichtet ist, ein in dem Bauraum (102) vorliegendes Schutzgas umzuwälzen;
wobei die Vorrichtung (100) ferner wenigstens eine Klimatisierungseinrichtung (300) umfasst, welche dazu eingerichtet ist, in einem Klimatisierungsbetrieb das von der Schutzgas-Umwälzungsvorrichtung (110) umgewälzte Schutzgas hinsichtlich seiner Temperatur und/oder seiner Feuchtigkeit zu klimatisieren,
**dadurch gekennzeichnet, dass** die Klimatisierungseinrichtung (300) einen Gegenstrom-Wärmetauscher (306) für eine Vorkühlung des Schutzgases umfasst, welchem über eine Abkühleinheit (312) gekoppelt ein Kühlkreislauf (314) zugeordnet ist, in welchem ein erwärmtes Kühlmittel zunächst durch einen Kompressor (318) verdichtet und erhitzt wird, anschließend durch einen Kühler (320) abgekühlt und verflüssigt wird und dann das abgekühlte Kühlmittel durch eine Drossel (322) dekomprimiert wird,
wobei das abgekühlte Kühlmittel auf den vorgekühlten Schutzgasstrom eingewirkt wird und darin vorliegende Feuchtigkeit im Bereich der Abkühleinheit (312) kondensiert,
wobei ferner ein Kondensat-Ableitungssystem (326) zum Entnehmen dieser kondensierten Feuchtigkeit aus der Klimatisierungseinrichtung (300) vorgesehen ist.

2. Vorrichtung (100) nach Anspruch 1, **dadurch gekennzeichnet, dass** die Schutzgas-Umwälzungsvorrichtung (110) ferner dazu eingerichtet ist, in dem Bauraum (102) einen Überdruck aufrechtzuerhalten.

3. Vorrichtung (100) nach einem der vorhergehenden Ansprüche, **dadurch gekennzeichnet, dass** sie ferner eine Pulverrückführung (219) zum Rückführen von nicht aufgeschmolzenem Werkstoffpulver in den Pulver-Vorratsbehälter (122; 212) umfasst, welche einen Teil der Pulver-Liefereinrichtung (200) bildet.

4. Vorrichtung (100) nach einem der vorhergehenden Ansprüche, **dadurch gekennzeichnet, dass** die Pulver-Liefereinrichtung (200) ferner vorzugsweise wenigstens eine Filtervorrichtung (215) für das Werkstoffpulver umfasst.

5. Vorrichtung (100) nach einem der vorhergehenden Ansprüche, **dadurch gekennzeichnet, dass** sie ferner eine Pulver-Absaugeinrichtung (120) umfasst, welche dazu eingerichtet ist, in dem Bauraum (102) verbleibendes Werkstoffpulver (P) abzusaugen und hierzu eine Umwälzpumpe (126) umfasst, wobei ein von der Umwälzpumpe (126) angetriebener Strom von Schutzgas das verbleibende Werkstoffpulver (P) durch einen Abscheider (128), insbesondere einen Zyklonabscheider (128), treibt.

6. Vorrichtung (100) nach einem der vorhergehenden Ansprüche, **dadurch gekennzeichnet, dass** die Klimatisierungseinrichtung (300) eine Steuereinheit umfasst, welche dazu eingerichtet ist, Parameter des Klimatisierungsbetriebs anzupassen.

7. Vorrichtung (100) nach Anspruch 6, **dadurch gekennzeichnet, dass** sie wenigstens eine Sensoreinheit umfasst, welche mit der Steuereinheit der Klimatisierungseinrichtung (300) betriebsmäßig gekoppelt und dazu eingerichtet ist, Daten hinsichtlich wenigstens eines Prozessparameters der Vorrichtung (100) zu liefern.

8. Vorrichtung (100) nach Anspruch 7, **dadurch gekennzeichnet, dass** der wenigstens eine Prozessparameter eine Temperatur und/oder eine relative oder absolute Feuchtigkeit des Schutzgases umfasst.

9. Vorrichtung (100) nach einem der vorhergehenden Ansprüche, wobei die wenigstens eine Klimatisierungseinrichtung (300) wenigstens teilweise in dem Bauraum (102) oder dem Pulver-Vorratsbehälter (122; 212) oder einer der Schutzgas-Umwälzungsvorrichtung (110) zugehörigen Gasleitung oder einer der Pulver-Liefereinrichtung (200) zugehörigen Gas- oder Pulverleitung oder einer der Pulver-Absaugeinrichtung (120) zugehörigen Gasleitung angeordnet ist, um dort befindliches Schutzgas zu klimatisieren.

## Claims

1. Device (100) for carrying out a method for producing an item (G) according to the method of selective powder melting by layer-by-layer building up of material (P) in powder form, comprising:
- an installation space (102) which is configured to accommodate the item (G) to be produced;
- a powder delivery apparatus (200) which is equipped with a powder reservoir (122; 212) and which is configured to supply material powder (P) into the installation space;
- a powder layer preparation apparatus (104) which is configured to prepare consecutive layers of the supplied material powder (P) on a carrier (106) arranged in the installation space (102);
- an irradiation apparatus which is configured to irradiate an ultimately prepared powder layer and as a result locally fuse it; and
- a shielding gas circulation device (110) which is configured to circulate a shielding gas present in the installation space (102);
wherein the device (100) furthermore comprises at least one conditioning apparatus (300) which is configured, in a conditioning mode, to condition the shielding gas circulated by the shielding gas circulation device (110) in terms of its temperature and/or its humidity,
**characterised in that** the conditioning apparatus (300) comprises a countercurrent heat exchanger (306) for pre-cooling of the shielding gas, to which a cooling circuit (314) is assigned coupled via a cooling unit (312), in which cooling circuit (314) a heated coolant is compressed and heated initially by a compressor (318), subsequently cooled and liquefied by a cooler (320) and then the cooled coolant is decompressed by a throttle (322),
wherein the cooled coolant acts on the pre-cooled shielding gas flow and moisture present therein condenses in the area of the cooling unit (312),
wherein a condensate discharge system (326) for removing this condensed moisture from the conditioning apparatus (300) is furthermore provided.

2. Device (100) according to Claim 1, **characterised in that** the shielding gas circulation device (110) is furthermore configured to maintain an overpressure in the installation space (102).

3. Device (100) according to any one of the preceding claims, **characterised in that** it furthermore comprises a powder return (219) for the return of material powder which has not fused into the powder reservoir (122; 212), which forms a part of the powder delivery apparatus (200).

4. Device (100) according to any one of the preceding claims, **characterised in that** the powder delivery apparatus (200) furthermore preferably comprises at least one filter device (215) for the material powder.

5. Device (100) according to any one of the preceding claims, **characterised in that** it furthermore comprises a powder extraction apparatus (120) which is configured to extract material powder (P) which remains in the installation space (102) and, for this purpose, comprises a circulation pump (126), wherein a flow of shielding gas driven by the circulation pump (126) drives the remaining material powder (P) through a separator (128), in particular a cyclone separator (128).

6. Device (100) according to any one of the preceding claims, **characterised in that** the conditioning apparatus (300) comprises a control unit which is configured to adjust parameters of the conditioning mode.

7. Device (100) according to Claim 6, **characterised in that** it comprises at least one sensor unit which is operationally coupled to the control unit of the conditioning apparatus (300) and is configured to supply data in terms of at least one process parameter of the device (100).

8. Device (100) according to Claim 7, **characterised in that** the at least one process parameter comprises a temperature and/or a relative or absolute humidity of the shielding gas.

9. Device (100) according to any one of the preceding claims, wherein the at least one conditioning apparatus (300) is arranged at least partially in the installation space (102) or the powder reservoir (122; 212) or a gas line associated with the shielding gas circulation device (110) or a gas or powder line associated with the powder delivery apparatus (200) or a gas line associated with the powder extraction apparatus (120) in order to condition the shielding gas located there.

## Revendications

1. Dispositif (100) de mise en oeuvre d'un procédé de fabrication d'un objet (G) selon la méthode de la fusion sélective de poudre par construction couche par couche à partir d'un matériau pulvérulent (P), comprenant :
- un espace de construction (102) conçu pour recevoir l'objet (G) à fabriquer ;
- une unité d'alimentation en poudre (200) équipée d'un réservoir de poudre (122 ; 212), qui est conçue pour amener le matériau en poudre (P) dans l'espace de construction;
- une unité de préparation de couche de poudre (104) conçue pour préparer des couches successives du matériau en poudre amené (P) sur un support (106) disposé dans l'espace de construction (102) ;
- une unité d'irradiation conçue pour irradier une couche de poudre préparée en dernier lieu et pour ainsi la faire fondre localement ; et
- un dispositif de circulation de gaz protecteur (110) conçu pour faire circuler un gaz protecteur présent dans l'espace de construction (102) ;
le dispositif (100) comprenant en outre au moins une unité de climatisation (300) conçue pour climatiser, quant à sa température et/ou à son humidité, le gaz protecteur mis en circulation par le dispositif de circulation de gaz protecteur (110), dans un mode de climatisation,
**caractérisé en ce que** l'unité de climatisation (300) comprend un échangeur de chaleur à contre-courant (306) qui est destiné à un pré-refroidissement du gaz protecteur et auquel est associé, par l'intermédiaire d'une unité de refroidissement (312), un circuit de refroidissement (314) dans lequel un agent réfrigérant mis à température est tout d'abord comprimé par un compresseur (318) et chauffé, puis refroidi par un refroidisseur (320) et liquéfié, suite à quoi l'agent réfrigérant refroidi est décomprimé par un étranglement (322),
l'agent réfrigérant refroidi agit sur le flux de gaz protecteur pré-refroidi, et l'humidité présente dans celui-ci est condensée dans la zone de l'unité de refroidissement (312), et
il est en outre prévu un système d'évacuation de condensat (326) pour évacuer cette humidité condensée hors de l'unité de climatisation (300).

2. Dispositif (100) selon la revendication 1,
**caractérisé en ce que** le dispositif de circulation de gaz protecteur (110) est en outre conçu pour maintenir une surpression dans l'espace de construction (102).

3. Dispositif (100) selon l'une des revendications précédentes,
**caractérisé en ce qu'**il comprend en outre une unité de recyclage de poudre (219) pour recycler le matériau en poudre non fondu vers le réservoir de poudre (122 ; 212), laquelle fait partie de l'unité d'alimentation en poudre (200).

4. Dispositif (100) selon l'une des revendications précédentes,
**caractérisé en ce que** l'unité d'alimentation en poudre (200) comprend en outre, de préférence, au moins un dispositif de filtration (215) du matériau en poudre.

5. Dispositif (100) selon l'une des revendications précédentes,
**caractérisé en ce qu'**il comprend en outre une unité d'aspiration de poudre (120) qui est conçue pour aspirer le matériau en poudre (P) restant dans l'espace de construction (102) et qui comprend à cet effet une pompe de circulation (126),
un flux de gaz protecteur entraîné par la pompe de circulation (126) chasse le matériau en poudre restant (P) à travers un séparateur (128), en particulier un séparateur à cyclone (128).

6. Dispositif (100) selon l'une des revendications précédentes,
**caractérisé en ce que** l'unité de climatisation (300) comprend une unité de commande conçue pour adapter les paramètres du mode de climatisation.

7. Dispositif (100) selon la revendication 6,
**caractérisé en ce qu'**il comprend au moins une unité de détection couplée fonctionnellement à l'unité de commande de l'unité de climatisation (300) et conçue pour fournir des données relatives à au moins un paramètre de traitement du dispositif (100).

8. Dispositif (100) selon la revendication 7,
**caractérisé en ce que** ledit au moins un paramètre de traitement inclut une température et/ou une humidité relative ou absolue du gaz protecteur.

9. Dispositif (100) selon l'une des revendications précédentes,
dans lequel ladite au moins une unité de climatisation (300) est disposée au moins partiellement dans l'espace de construction (102) ou dans le réservoir de poudre (122 ; 212) ou dans une conduite de gaz associée au dispositif de circulation de gaz protecteur (110) ou dans une conduite de gaz ou de poudre associée à l'unité d'alimentation en poudre (200) ou dans une conduite de gaz associée à l'unité d'aspiration de poudre (120), afin de climatiser le gaz protecteur qui s'y trouve.
